# EUROPÄISCHE PATENTSCHRIFT

(11) **EP 0 896 741 B1**
(45) Veröffentlichungstag und Bekanntmachung des Hinweises auf die Patenterteilung: **15.03.2000**
(21) Anmeldenummer: 97921747.8
(22) Anmeldetag: 24.04.1997
(51) Int. Cl.: H01M 8/10, H01M 4/88, C25B 9/00

(54) **VERFAHREN ZUR HERSTELLUNG EINER KATIONENAUSTAUSCHENDEN POLYMERELEKTROLYT MEMBRANE (PEM)**
PROCESS FOR PRODUCING A CATION-EXCHANGING POLYMER ELECTROLYTE MEMBRANE (PEM)
PROCEDE DE FABRICATION D'UNE MEMBRANE ELECTROLYTIQUE POLYMERE ECHANGEUSE DE CATIONS

(30) Priorität: 24.04.1996 DE 19616160
(43) Veröffentlichungstag der Anmeldung: 17.02.1999
(73) Patentinhaber: Aventis Research & Technologies GmbH & Co KG, 65926 Frankfurt am Main (DE)
(72) Erfinder: SCHNELLER, Arnold, D-64409 Messel (DE); WITTELER, Helmut, D-67259 Beindersheim (DE)
(86) Internationale Anmeldenummer: EP9702103
(87) Internationale Veröffentlichungsnummer: WO9740543

(56) Entgegenhaltungen:
- EP-A- 0 574 791
- EP-A- 0 604 882
- EP-A- 0 637 851
- WO-A-94/14203
- WO-A-96/13073
- US-A- 4 876 115
- US-A- 5 211 984
- US-A- 5 272 017
- JOURNAL OF MEMBRANE SCIENCE, Bd. 73, Nr. 1, 2.Oktober 1992, Seiten 87-97, XP000360348 HOLZE R UND AHN J: "Advances in the use of perfluorinated cation exchange membranes in integrated water electrolysis and hydrogen/oxygen fuel cell systems"

## Beschreibung

Die Erfindung betrifft ein Verfahren zur Herstellung einer Kationenaustauschermembran, insbesondere für elektrochemische Zellen.

Kationenaustauscher-Membrane mit einer oberflächlichen, katalytisch aktiven Schicht lassen sich in Brennstoffzellen als Protonenleiter-Membrane verwenden. Der Katalysator für die in der Brennstoffzelle durchzuführenden elektrochemischen Reaktionen kommt dazu in fein verteilter Form auf leitfähiger Aktivkohle zur Anwendung. Die Aktivkohle dient als elektrische Kontaktierung der Katalysator-partikel.

Übliche Verfahren zur Herstellung von mit Platin und Platinmetallen beschichteten Kationenaustauscher-Membranen, die in Niedertemperatur-Brennstoffzellen als feste Protonenleiter eingesetzt werden können, sind die sogenannten "Ink"-Verfahren. Hierbei wird ein mit einem geeigneten Katalysator beschichtetes elektrisch leitfähiges Kohlenstoffmaterial (z. B. Platin/Aktivkohle mit einem Platin-Gewichtsanteil von 20 bis 40%) in der Lösung eines sulfonierten Fluorpolymers suspendiert und die so erhaltene Suspension auf ein geeignete Membran aufgetragen (US-A-5 211 984, US-A-5 272 017).

In verschiedenen Varianten des "Ink"-Verfahrens wird der zur Beschichtung verwendeten Suspension noch ein hydrophobes Material zugefügt; beispielsweise Polytetrafluorethylen (PTFE) oder fluorierter Graphit (EP-A- 0 483 085, EP-A- 0 560 295, US-A-5 272 017). Die dadurch bewirkte Hydrophobisierung der katalytisch aktiven Schicht macht sich in Membran-Brennstoffzellen insbesondere auf der Kathodenseite (auch "Sauerstoffseite") durch eine erhöhte Effektivität der katalytisch aktiven Schicht bemerkbar.

Ferner ist die Verwendung von Ruthenium, Rutheniumoxid, Iridiumoxid, Molybdäncarbid und Wolframcarbid zur Optimierung der Effizienz der katalytisch aktiven Schicht bekannt (US-A-4 876 115, EP-A-0 560 295, K. Ledjeff et al., Int. J. Hydrogen Energy 19, 453-455 (1994)).

Ein Verfahren zur Herstellung poröser, katalytisch aktiver Deckschichten beruht auf der Verwendung von Mischungen aus Aktivkohle, PTFE, Platin/Kohlenstoff und mit einem Kationenaustauscher imprägnierter Aktivkohle. Diese Mischungen werden auf Protonenleiter-Membrane aufgebracht (EP-A-0 577 291). Meistens handelt es sich bei dem Material das zur katalytisch aktiven Beschichtung der Kationenaustauscher-Membranen verwendet wird um Polymere mit perfluorierten Kohlenstoff-Hauptketten, die lateral mit ionischen Gruppen, zumeist Sulfonsäuregruppen, verknüpft sind (beispielsweise ®NafionTM). Das Gleiche gilt für die Lösungen von Kationenaustauscher-Polymeren, die nach den genannten Verfahren auf Membranen aufgebracht werden. Diese Polymere sind chemisch zwar sehr beständig, doch wiegt diese in Membran-Brennstoffzellen gar nicht in vollem Umfang benötigte Beständigkeit (z. B. gegen Chlor und Alkalien) ihren hohen Preis und die auf ihrer schlechten Löslichkeit in üblichen Lösungsmitteln beruhenden Verarbeitungsschwierigkeiten bei weitem nicht auf.

Nur eins der oben angesprochenen Verfahren (EP-A-0 577 291) macht von einer Möglichkeit Gebrauch, die spezifische Oberfläche der katalytisch aktiven Deckschicht der Membran zu vergrößern und so die Kontaktfläche zwischen den Brenngasen einer Brennstoffzelle und dem Katalysator zu vergrößern. Der dazu durchgeführte Prozeß geht jedoch zu Lasten der Kontinuität der Protonenleiter-Phase in der katalytisch aktiven Deckschicht.

Die Aufgabe der vorliegenden Erfindung ist es somit eine technisch und wirtschaftlich günstige Alternative zu gängigen Beschichtungsmethoden von Ionenaustauscher-Membranen für elektrochemische Zellen bereitzustellen. Ferner liegt der Erfindung die Aufgabe zugrunde, eine Kationenaustauschermembran, insbesondere für eine Membran/Elektroden-Einheit zu schaffen, die den Brenngasen einer Membran-Brennstoffzelle den freien Zutritt zu einer möglichst großen katalytisch aktiven Membranoberfläche gestattet.

Diese Aufgabe wird erfindungsgemäß gelöst durch ein Verfahren zur Herstellung einer Kationenaustauschermembran, wobei man ein organisches Polymer mit Sulfonsäuregruppen sowie feinverteilte elektrisch leitfähige Partikel eines Katalysatormaterials in eine flüssige Phase einbringt und man mit der entstehenden Suspension eine Folie aus einem Kationenaustauschermaterial mindestens einseitig beschichtet. Das organische Polymer mit Sulfonsäuregruppen ist in einem aprotischen polaren Lösemittel löslich und enthält Einheiten der Formel (Ar¹X) und (Ar²Y), die mindestens teilweise durch Sulfonsäuregruppen substituiert sind, wobei Ar¹ und Ar² gleiche oder verschiedene zweiwertige Arylenreste, X Sauerstoff oder Schwefel und Y einen Carbonyl-, Sulfoxid- oder Sulfonylrest bedeuten. Das organische Polymer wird in einem Lösungsmittel aufgelöst, in der Lösung wird ein feinverteiltes elektrisch leitfähiges Katalysatormaterial suspendiert und mit dieser Suspension eine Folie beschichtet, die einen polymeren Kationenaustauscher mit Sulfonsäuregruppen enthält. Die noch Lösungsmittel enthaltende Beschichtung wird mit einer Flüssigkeit behandelt, die mit dem Lösungsmittel mischbar ist, in der das gelöste Kationenaustauscher Material jedoch nicht löslich ist, so daß sich in der gebildeten Deckschicht der Membran Poren bilden. Die Ionenaustauscherkapazität der Membran beträgt erfindungsgemäß 0,3 bis 2 mmol H⁺/g.

Das Polymer kann auch mehrere unterschiedliche Einheiten der Formel (Ar¹X) und mehrere unterschiedliche Einheiten der Formel (Ar²Y) enthalten. Ferner kann das Polymer auch zweiwertige Reste der Formel Ar³-C(CH₃)₂-, Ar³-C(CF₃)₂-, Ar³-C-(Phenyl)₂-, den Rest Ar³-Cyclohexylen oder den Rest -Ar-Fluoren enthalten, wobei Ar³ eine aromatische Einheit bedeutet.

Die Arylenreste Ar¹ und Ar² stellen zweiwertige aromatische Einheiten dar, beispielsweise den Phenyl-, Biphenyl-, Naphthylen- oder Anthrylenrest. Vorzugsweise steht Ar¹ und Ar² für den Phenylenrest, insbesondere den 1,4-Phenylenrest. Bevorzugte aromatische Einheiten sind aromatische Polyetherketone, Polyethersulfone, Polyarylensulfide, beispielsweise der Formeln I bis V oder Polybenzimidazole

[ - O - Ar - O - Ar - CO - Ar - ] I

[ - O - Ar - O - Ar - CO - Ar - CO - Ar - ] II

[ - O - Ar - SO₂ - Ar - ] III

[- O - Ar - SO₂ - Ar -O - Ar -C(CH₃)₂- Ar -] IV

[ - Ar - S - ] V

Ferner kann das Polymer des Kationenaustauschermaterials auch zweiwertige N,N'-Pyromellitsäurediimid-Einheiten, Phthalsäureimid-Einheiten und/oder Benzimidazol-Einheiten enthalten.

Durch Sulfonierung sind Polymere erhältlich, die an allen oder an einem Teil der aromatischen Einheiten eine Sulfonsäuregruppe -SO₃H tragen. Es werden Sulfonierungsprodukte von Polyaryletherketonen (I, II), Polyarylethersulfonen (III, IV) und Polyarylthioethern (V) verwendet, die ein lonenaustauscheräquivalent von 0.3 mmol H+/g bis 2 mmol H+/g besitzen. Gerade diese Polymere weisen aufgrund ihrer chemischen Struktur eine besondere Widerstandsfähigkeit unter den in einer Brennstoffzelle herrschenden Bedingungen auf.

Die Herstellung der Polymere, der sulfonierten Polymere und die Herstellung von Membranen aus diesen Polymeren ist beispielsweise aus der nachstehend genannten Literatur, auf die hiermit ausdrücklich Bezug genommen wird, bekannt: EP-A-0 008 895; EP-A-0 575 807; DE-A-4 242 692; K. Ledjeff et al., J. Membrane Sci. 83, 211-220 (1993); B. C. Johnson et al., J. Polym. Sci., Polym Chem. Ed., 22, 721-737; A. Noshay, L. M. Robeson, J. Appl. Polym. Sci. 20, 1885-1903 (1976). Ebenso können Mischungen dieser sulfonierten Polymere untereinander sowie Mischungen der sulfonierten Polymere mit anderen Polymeren verwendet werden, die vorzugsweise ebenfalls in aprotisch-polaren Lösungsmitteln löslich sind.

Das erfindungsgemäße Verfahren umfasst die folgenden Verfahrenschritte:
1. Beschichten einer Folie aus einem Kationenaustauschermaterial durch Gießen, Sprühen oder Tauchen mit einer Suspension, die folgende Komponenten enthält: ein flüssiges Lösungs- bzw. Suspensionsmittel; einen gelösten Polymerelektrolyten sowie ein elektrisch leitfähiges Katalysatormaterial, z.B. ein mit einem katalytisch aktiven Metall imprägniertes, leitfähiges Kohlenstoffmaterial. Gegebenenfalls können noch weitere Polymere in der Suspension vorliegen.
2. Ggf. Trocknen der Membran.

Um die so aufgetragene katalytisch aktive Schicht porös zu machen, und ihr damit eine größere spezifische Oberfläche zu verleihen, können erfindungsgemäß einer oder mehrere der folgenden Arbeitsschritte angeschlossen werden:
3. Quellen der Membran in einer Flüssigkeit, die für den in der katalytisch aktiven Schicht vorliegenden Polymerelektrolyten ein Lösungsmittel ist.
4. Kontaktieren der in Schritt 3 erhaltenen Membran mit einer Flüssigkeit,die mit dem Lösungsmittel mischbar ist aber ein Nicht-Lösungsmittel für den in Schritt 3 genannten Polymerelektrolyten ist.
5. Trocknen der Membran.

Bevorzugt wird die Folie vor dem Beschichten mechanisch oder durch Anlösen und Wiederausfällen aufgerauht.

Erfindungsgemäß kann zur Erzeugung einer porösen Deckschicht auch ein vereinfachtes Verfahren durchgeführt werden, bei dem die Schritte 2 und 3 des oben beschriebenen Verfahrens ausgelassen werden. Falls die durch Schritt 4 erzeugte poröse Deckschicht beim Trocknen kollabiert, wird anstatt des unter 4 genannten Nicht-Lösungsmittels eine Reihe von Nicht-Lösungsmitteln abnehmender Polarität verwendet, z. B. zunächst ein Alkohol (z. B. Methanol, Ethanol, n/i-Propanol, n/i/t-Butanol), dann ein Keton (z. B. Aceton, Methyethylketon, Cyclohexanon), dann ein aliphatischer oder cycloaliphatischer Ether (z. B. Diethylether, t-Butylmethylether, Tetrahydrofuran) und schließlich ein flüchtiger Kohlenwasserstoff.

Das oben beschriebene Verfahren ist weiter dadurch gekennzeichnet, daß außer den oben beschriebenen Polymerelektrolyten auch deren Mischungen mit anderen Polymeren in den zur Beschichtung verwendeten Suspensionen eingesetzt werden können. Insbesondere werden folgende Polymere verwendet:
- Polymere, die unter den Arbeitsbedingungen einer elektrochemischen Zelle beständig sind, im gleichen Lösungsmittel wie der oben beschriebene Polymerelektrolyt löslich sind, und dazu geeignet sind, die mechanischen Eigenschaften der Deckschicht zu verbessern, insbesondere lösliche Polymere, wie zum Beispiel ®Ultrason S (aromatisches Polyethersulfon mit Bisphenol A-Einheiten, BASF AG), ®Ultrason E (aromatisches Polyethersulfon, BASF AG), ®Radel (aromatisches Polyethersulfon mit Biphenylen-Einheiten, Amoco Performance Products) oder ®Ultem (aromatisches Polyetherimid, General Electric Co.).
- Polymere, die aufgrund ihrer Hydrophobie geeignet sind, die Membranoberfläche zu hydrophobisieren, insbesondere Fluorpolymere und PTFE. Es ist insbesondere sinnvoll, nur die Membranseite, die in einer Brennstoffzelle der Kathodenseite (auch "Sauerstoffseite") zugewandt ist, mit einer hydrophobisierten Deckschicht zu versehen, während auf der anderen Seite eine nicht hydrophobisierte Deckschicht aufgebracht wird.

In Mischungen mit nicht-protonenleitfähigen Polymeren wird das nicht-protonenleitfähige Polymer insbesondere in Konzentrationen unter 60 Gew.-% eingesetzt.
In einer weiteren Ausführungsform des erfindungsgemäßen Verfahrens wird die Deckschicht auf eine Membran aufgebracht. Wahlweise kann die Deckschicht auch auf eine Membran, die ein sulfoniertes Fluorpolymer enthält oder aus Mischungen davon mit anderen Polymeren aufgebracht werden. Erfindungsgemäß verwendbare sulfonierte Fluorpolymere enthalten beispielsweise Wiederholungseinheiten mit den Strukturen VI und VII. Derartige Polymere sind in Form von Membranen insbesondere von E. I. du Pont de Nemours & Co. unter dem Handelsnamen ®Nafion sowie von Dow Chemical Co. erhältlich.

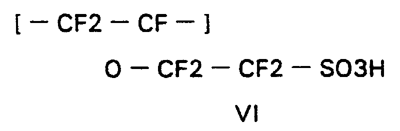

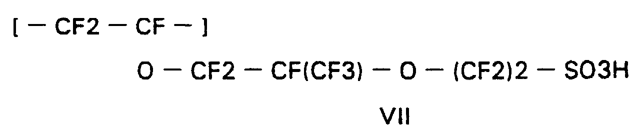

Anstatt der oben benannten Polymerelektrolyte können auch ihre Derivate, bei denen ein Teil der Sulfonsäuregruppen derivatisiert ist, eingesetzt werden. Die Gebrauchs- und Verarbeitungseigenschaften, beispielsweise die mechanischen Eigenschaften und die Permeabilität der Membran, können durch Derivatisierung der Sulfonsäuregruppe systematisch verändert werden.

Als Derivate der oben benannten Polymerelektrolyte werden insbesondere Salze der Sulfonsäuren, Sulfonsäurechloride und Sulfonsäureamide verwendet. Salze der Sulfonsäure lassen sich mit Metallsalzen, Ammoniumsalzen, Aminen und deren quarternären Salzen sowie mit Phosphoniumsalzen herstellen. Sulfonsäurechloride werden aus den Sulfonsäuren mit geeigeneten Sulfonierungsreagenzien oder durch Chlorsulfonierung von nicht sulfonierten Polymeren hergestellt. Sulfonamide entstehen durch die Reaktion der Sulfonsäurechloride mit primären und sekundären Aminen. Die Umsetzung mit Diaminen und höheren Aminen bietet über die Sulfonamidbildung eine Möglichkeit zur Vernetzung der Polymere. Diese Möglichkeit besteht auch durch Einwirkung energiereicher Strahlung auf die Polymere.

Als Lösungsmittel für das Polymer in den Schritten 1 bis 3. werden insbesondere N-Methylpyrrolidon (NMP), Dimethylsulfoxid (DMSO), γ-Butyrolacton (γ-BLO) und Dimethylacetamid (DMAC) eingesetzt. Für Schritt 1 und 3 werden insbesondere Polymerlösungen mit Konzentrationen von 15 bis 40%, insbesondere 20% bis 35% des Polymers im Lösungsmittel verwendet.

Das Quellen oder Besprühen der Membran in 1 und 3 erfolgt insbesondere mit Hilfe von Mischungen aus Wasser und NMP, DMSO, γ-BLO oder DMAC, wobei Wasser in einer Konzentration von 5% bis 50%, insbesondere 10 bis 45% vorliegt. Die in Schritt 4 genannte Flüssigkeit sollte mit dem in Schritt 1 und 3 verwendeten Lösungs- und Quellungsmittel mischbar sein. Insbesondere ist für Schritt 4 Wasser, das in Konzentrationen von 2% bis 30% ein polar-aprotisches Lösungsmittel für das Polymer (z. B. NMP, DMSO, γ-BLO, DMAC) enthält, geeignet. Ferner sind niedere aliphatische Alkohole (z. B. Methanol, Ethanol, n/i-Propanol, n/i/t-Butanol) und Ketone (z. B. Aceton, Methylehylketon, Butanon) geeignet.

Der Membrantrocknungsprozeß (Schritt 2 und Schritt 5) wird bevorzugt bei Temperaturen zwischen 20°C und 140°C, insbesondere bei Temperaturen zwischen 30 und 100 °C, bevorzugt zwischen 40 und 80°C durchgeführt. Zur Beschleunigung des Trocknungsvorgangs kann auch bei vermindertem Druck gearbeitet werden.
Die so erhaltenen Membrane weisen insbesondere eine Dicke im Bereich von 10µm bis 250 µm, vorzugsweise 20µm bis 200 µm auf.

Als besonderer Vorteil des hier beschriebenen Verfahrens ist seine einfache Durchführbarkeit hervorzuheben. Im Gegensatz zu den bislang üblichen Ink-Verfahren (US-A-5 211 984) werden keine hohen Temperaturen und Drucke benötigt.

Als elektrisch leitfähiges Kohlenstoffmaterial wird vorzugsweise ein feinkörniges Pulver aus leitfähiger Aktivkohle, Ruß, Graphit oder graphitierter Aktivkohle verwendet, welches mit einem katalytisch aktiven Metall imprägniert ist. Als katalytisch aktive Metalle kommen insbesondere Elemente der Gruppen VIIIa (Fe, Co, Ni, Ru, Rh, Pd, Os, Ir, Pt) und Ib (Cu, Ag, Au) des periodischen Systems der Elemente oder Zinn oder Titan oder Mischungen oder Legierungen der hier benannten Elemente in Frage. Insbesondere werden folgende Legierungen und Gemische eingesetzt:
. Platin/Ruthenium
. Platin/Ruthenium/Zinn
. Iridiumoxid/Titan

Die zuletzt genannte Mischung kann auch in reiner Form ohne Kohlenstoff eingesetzt werden. Die Flächenbelegung der Membran mit dem Metall liegt vorzugsweise im Bereich von 0.001 mg/cm² bis 10 mg/cm².

Die poröse Oberflächenschicht der Folie besitzt eine Dicke zwischen 1 µm und 100 µm, insbesondere 30 und 50µm und weist Poren mit einem Durchmesser von 0.01 µm bis 10 µm auf.
In einer weiteren bevorzugten Ausführungsform der Erfindung ist die Oberfläche gewellt mit einer Wellenlänge von 0.1 µm bis 1 µm und einer Wellentiefe von 0.1 µm bis 0.2 µm.
Die Gesamtdicke der Membran beträgt 50 bis 1000µm, insbesondere 100 bis 700 µm.

Die erfindungsgemäß metallisierte Membran stellt eine Membran-Elektroden-Einheit dar, die den Brenngasen, beispielsweise H₂ und O₂, einer Membranbrennstoffzelle den Zutritt zu einer großen spezifischen Membranoberfläche gestattet. Daraus ergibt sich eine hohe Aktivität der Membran-Elektroden-Einheit, da die Oberfläche der Membran porös ist und das katalytisch wirksame Metall nicht nur unmittelbar auf der Membranoberfläche sondern auch in den Poren der Oberfläche angeordnet ist.

Die nach den oben beschriebenen Verfahren hergestellten Kationenaustauscher-membrane eignen sich insbesondere für den Einsatz in elektrochemischen Zellen, beispielsweise in Elektrolysezellen und in Membran-Brennstoffzellen.

### Beispiele

### Beispiel 1

20 g des Sulfonierungsproduktes von Polymer II, das gemäß EP-A-0 575 801 hergestellt wurde (lonenaustauscheräquivalent 1.4 mmol H +/g), werden in 100 ml NMP gelöst. Die Lösung wird auf einer Glasplatte zu einem Film homogener Dicke ausgerakelt und im Umluftofen bei 80°C getrocknet. Der so erhaltene Film ist 100 µm dick. Auf diesen Film wird beidseitig eine Flüssigkeit folgender Zusammensetzung aufgetragen: 200 mg Polymer II gelöst in 800 mg N-Methylpyrrolidon, 300 mg XC-72 Kohenstoffpulver von Prototech (Kohlenstoffpulver ist mit 19.8 Gew.-% Platin imprägniert). Der Film mit der so erhaltenen Deckschicht wird 12 h bei 80°C getrocknet, 24 h gewässert und erneut getrocknet. Die so hergestellte Membran wird als Protonenleiter-Membran mit katalytisch aktiver Deckschicht in Brennstoffzellen eingesetzt.

### Beispiel 2

20 g des Sulfonierungsproduktes von Polymer II, das gemäß EP-A-0 575 801 hergestellt wurde (lonenaustauscheräquivalent 1.4 mmol H+/g), werden in 100 ml NMP gelöst. Die Lösung wird auf einer Glasplatte zu einem Film homogener Dicke ausgerakelt und im Umluftofen bei 80°C getrocknet. Der so erhaltene Film ist 100 µm dick. Auf diesen Film wird beidseitig eine Flüssigkeit folgender Zusammensetzung aufgetragen: 200 mg Polymer II gelöst in 800 mg N-Methylpyrrolidon, 300 mg XC-72 Kohenstoffpulver von Prototech (Kohlenstoffpulver ist mit 19.8 Gew.-% Platin imprägniert). Der Film mit der so erhaltenen Deckschicht wird für 5 min in eine Mischung aus 70% Wasser und 30% NMP getaucht und entwickelt dabei eine poröse Oberfläche. Die so hergestellte Membran wird als Protonenleiter-Membran mit katalytisch aktiver Deckschicht in Brennstoffzellen eingesetzt.

## Patentansprüche

1. Verfahren zur Herstellung einer Kationenaustauschermembran, wobei man ein organisches Polymer mit Sulfonsäuregruppen sowie feinverteilte elektrisch leitfähige Partikel eines Katalysatormaterials in eine flüssige Phase einbringt und man mit der entstehenden Suspension eine Folie aus einem Kationenaustauschermaterial mindestens einseitig beschichtet, dadurch gekennzeichnet, daß das organische Polymer mit Sulfonsäuregruppen in einem aprotischen polaren Lösemittel löslich ist und Einheiten der Formel (Ar¹X) und (Ar²Y) enthält, die mindestens teilweise durch Sulfonsäuregruppen substituiert sind, wobei Ar¹ und Ar² gleiche oder verschiedene zweiwertige Arylenreste, X Sauerstoff oder Schwefel und Y einen Carbonyl-, Sulfoxid- oder Sulfonylrest bedeuten und man dieses Material in einem Lösungsmittel auflöst, man in der Lösung ein feinverteiltes elektrisch leitfähiges Katalysatormaterial suspendiert und man mit dieser Suspension eine Folie beschichtet, die einen polymeren Kationenaustauscher mit Sulfonsäuregruppen enthält und man die noch Lösungsmittel enthaltende Beschichtung mit einer Flüssigkeit behandelt, die mit dem Lösungsmittel mischbar ist, in der das gelöste Kationenaustauscher-Material jedoch nicht löslich ist, so daß sich in der gebildeten Deckschicht der Membran Poren bilden und die Ionenaustauscherkapazität der Membran 0,3 bis 2 mmol H⁺/g beträgt.

2. Verfahren nach Anspruch 1, dadurch gekennzeichnet, daß das Polymer auch zweiwertige Reste der Formel Ar³-C(CH₃)₂-, Ar³-C(CF₃)₂-, Ar³-C-(Phenyl)₂-, den Rest Ar³-Cyclohexylen oder den Rest -Ar-Fluoren enthält, wobei Ar³ eine aromatische Einheit bedeutet.

3. Verfahren nach mindestens einem der Ansprüche 1 oder 2, dadurch gekennzeichnet, daß das Polymer ein sulfoniertes aromatisches Polyetherketon, Polysulfon, Polyarylensulfid oder Polybenzimidazol ist.

4. Verfahren nach mindestens einem der Ansprüche 1 bis 3, dadurch gekennzeichnet, daß das elektrisch leitfähige Katalysatormaterial eines oder mehrere Elemente der Gruppen VIIIa (Fe, Co, Ni, Ru, Rh, Pd, Os, Ir) oder Ib (Cu, Ag, Au) des periodischen Systems der Elemente oder Zinn oder Titan oder Mischungen oder Legierungen dieser Elemente enthält.

5. Verfahren nach mindestens einem der Ansprüche 1 bis 4, dadurch gekennzeichnet, daß das elektrisch leitfähige Katalysatormaterial ein Kohlenstoffmaterial ist, das mit einem Metall der Gruppen VIIIa oder Ib des periodischen Systems der Elemente oder Zinn oder Titan oder Mischungen oder Legierungen dieser Elemente imprägniert ist.

6. Verfahren nach mindestens einem der Ansprüche 1 bis 5, dadurch gekennzeichnet, daß die Flächenbelegung der Membran mit dem katalytisch aktiven Katalysatormaterial 0,001 mg/cm² bis 10 mg/cm² beträgt.

7. Verfahren nach mindestens einem der Ansprüche 1 bis 6, dadurch gekennzeichnet, daß die Membran nach dem Beschichten durch Trocknen von noch anhaftenden Lösemittel befreit wird.

8. Verfahren nach mindestens einem der Ansprüche 1 bis 7, dadurch gekennzeichnet, daß die Folie vor dem Beschichten mechanisch oder durch Anlösen und Wiederausfällen angerauht wird.

9. Verfahren nach mindestens einem der Ansprüche 1 bis 8, dadurch gekennzeichnet, daß die Oberfläche der Membran durch Einwirkung, energiereicher Strahlung oder geeigneter chemischer Substanzen vernetzt wird.

## Claims

1. A method for preparing a cation exchange membrane, comprising the introduction of an organic polymer having sulfonic acid groups and of finely disperse electrically conductive particles of a catalyst material into a liquid phase, the resulting suspension being used to coat a foil of a cation exchange material on at least one side, wherein the organic polymer having sulfonic acid groups is soluble in an aprotic polar solvent and contains units of the formulae (Ar¹X) and (Ar²Y) which are at least partially substituted by sulfonic acid groups, Ar¹ and Ar² being identical or different bivalent arylene radicals, X being oxygen or sulfur and Y being a carbonyl radical, sulfoxide radical or sulfonyl radical and said material being dissolved in a solvent, a finely disperse electrically conductive catalyst material being suspended in the solution and this suspension being used to coat a foil which contains a polymeric cation exchanger having sulfonic acid groups and the coating which still contains solvent being treated with a liquid which is miscible with the solvent, but in which the dissolved cation exchange material is insoluble, so that pores are formed in the resulting top layer resulting of the membrane and the ion exchange capacity of the membrane is from 0.3 to 2 mmol of H⁺/g.

2. The method as claimed in claim 1, wherein the polymer also contains bivalent radicals of the formula Ar³-C(CH₃)₂-, Ar³-C(CF₃)₂-, Ar³-C-(phenyl)₂-, the radical Ar³-cyclohexylene or the radical -Ar-fluorene, Ar³ being an aromatic unit.

3. The method as claimed in at least one of claims 1 or 2, wherein the polymer is a sulfonated aromatic polyetherketone, polysulfone, poly(arylene sulfide) or polybenzimidazole.

4. The method as claimed in at least one of claims 1 to 3, wherein the electrically conductive catalyst material contains one or more elements of the groups VIIIa (Fe, Co, Ni, Ru, Rh, Pd, Os, Ir) or Ib (Cu, Ag, Au) of the Periodic Table of the Elements or tin or titanium or mixtures or alloys of these elements.

5. The method as claimed in at least one of claims 1 to 4, wherein the electrically conductive catalyst material is a carbon material which is impregnated with a metal of the groups VIIIa or Ib of the Periodic Table of the Elements or tin or titanium or mixtures or alloys of these elements.

6. The method as claimed in at least one of claims 1 to 5, wherein the coverage of the membrane with the catalytically active catalyst material is from 0.001 mg/cm² to 10 mg/cm².

7. The method as claimed in at least one of claims 1 to 6, wherein the membrane after coating is freed from any solvent still adhering by drying.

8. The method as claimed in at least one of claims 1 to 7, wherein the foil, prior to coating, is roughened mechanically or by solvation and reprecipitation.

9. The method as claimed in at least one of claims 1 to 8, wherein the surface of the membrane is crosslinked by exposure to high-energy radiation or suitable chemical substances.

## Revendications

1. Procédé de préparation d'une membrane échangeuse de cations selon lequel on introduit dans une phase liquide un polymère organique possédant des groupes acide sulfonique, ainsi que des particules électroconductrices finement divisées d'un matériau catalytique et on enduit avec la suspension ainsi obtenue une feuille constituée d'un matériau échangeur de cations, sur au moins l'une de ses faces, caractérisé en ce que le polymère organique possédant des groupes acide sulfonique est soluble dans un solvant polaire aprotique et renferme des unités de formules (Ar¹X) et (Ar²Y) qui sont substituées, au moins partiellement, par des groupes acide sulfonique, Ar¹ et Ar² désignant des radicaux arylène bivalents identiques ou différents, X désigne l'oxygène ou le soufre et Y désigne un radical carbonyle, sulfoxyde ou sulfonyle, et en ce que l'on dissout ce matériau dans un solvant, on met en suspension dans la solution un matériau catalyseur électroconducteur finement divisé et on enduit avec cette suspension une feuille qui renferme un échangeur de cations polymère contenant des groupes acide sulfonique, et on traite le revêtement contenant encore du solvant avec un liquide qui est miscible avec le solvant, dans lequel le matériau échangeur de cations dissous n'est toutefois pas soluble, de sorte qu'il se forme des pores dans la couche formée de revêtement de la membrane, et en ce que la capacité d'échange d'ions de la membrane est de 0,3 à 2 mmol de H⁺/g.

2. Procédé selon la revendication 1, caractérisé en ce que le polymère contient aussi des groupes bivalents de formule des groupes de formule Ar³-C(CH₃)₂-, Ar³-C(CF₃)₂-, Ar³-C-(phényl)₂-, le groupe Ar³-cyclohexylène ou le groupe -Ar-fluorène, Ar³ étant une unité aromatique.

3. Procédé selon au moins une des revendications 1 ou 2, caractérisé en ce que le polymère est une polyéthercétone, une polyéthersulfone, un polyarylènesulfure ou un polybenzimidazole aromatique, sulfoné(e).

4. Procédé selon au moins une des revendications 1 à 3, caractérisé en ce que le matériau catalytique électroconducteur contient un ou plusieurs éléments des groupes VIIIa (Fe, Co, Ni, Ru, Rh, Pd, Os, Ir) ou Ib (Cu, Ag, Au) de la classification périodique des éléments ou de l'étain ou du titane ou des mélanges ou alliages de ces éléments.

5. Procédé selon au moins une des revendications 1 à 4, caractérisé en ce que le matériau catalytique électroconducteur est un matériau carboné qui est imprégné d'un métal des groupes VIIIa ou Ib de la classification périodique des éléments ou d'étain ou de titane ou de mélanges ou alliages de ces éléments.

6. Procédé selon au moins une des revendications 1 à 5, caractérisé en ce que la quantité de matériau catalytiquement actif recouvrant la surface de la membrane est de 0,001 mg/cm² à 10 mg/cm².

7. Procédé selon au moins une des revendications 1 à 6, caractérisé en ce que la membrane, après revêtement, est débarrassée par séchage du solvant qui adhère encore.

8. Procédé selon au moins une des revendications 1 à 7, caractérisé en ce que la feuille, avant de la revêtir, est rendue rugueuse soit par des moyens mécaniques, soit par dissolution et reprécipitation.

9. Procédé selon au moins une des revendications 1 à 8, caractérisé en ce que la surface de la membrane est réticulée par l'action d'un rayonnement riche en énergie ou par des substances chimiques appropriées.
